# EUROPEAN PATENT APPLICATION

(11) **EP 1 813 836 A1**
(43) Date of publication of application: **01.08.2007**
(21) Application number: 05788212.8
(22) Date of filing: 29.09.2005
(51) Int. Cl.: F16H 1/32

(54) **WAVE GEAR DEVICE**

(30) Priority: 30.09.2004 JP 2004287451
(71) Applicant: Nabtesco Corporation, Tokyo 105-0022 (JP)
(72) Inventor: LI, Shuting c/o Tsu Plant, Nabtesco Corporation, Tsu-shi Mie 514-8533 (JP)
(74) Representative: Grünecker, Kinkeldey, Stockmair & Schwanhäusser Anwaltssozietät
(86) International application number: PCT/JP2005/018028
(87) International publication number: WO 2006/035907

(57) **Abstract**

Provided is a wave gear device capable of transmitting a higher torque than that of the background art.

The silk hat type wave gear device 10 comprises: an annular circular spline 20 having an internal teeth 21 formed thereon; a flexible flex spline 30 including an external tooth portion 31 having an external teeth 31a formed to mesh partially with the internal teeth 21 and arranged on the inner side of the circular spline 20; and a wave generator 40 arranged on the inner side of the flex spline 30 for rotating the flex spline 30 while warping the same with respect to the circular spline 20. The flex spline 30 includes a boss portion 32 adapted to be fixed on an external member, and a connecting portion 33 for connecting the external tooth portion 31 and the boss portion 32. The connecting portion 33 is so shaped that a sectional shape when cut in a plane extending through an axis of rotation 30a of the flex spline 30 is gradually reduced in thickness toward the substantial center from the side of the external tooth portion 31 and the side of the boss portion 32, and that two confronting outer lines 33a and 33b on the sectional shape are substantially arcuate.

## Description

### Technical Field

The present invention relates to a wave gear device for transmitting a torque.

### Background Art

In the background art, there is known a wave gear device (as referred to Patent Document 1, for example), which is provided with a flexible external tooth gear including a curved portion having a diameter gradually reduced from the side of a diaphragm toward the side of a trunk portion.
Patent Document 1: JP-A-2004-28122 (Pages 3 - 4, Fig. 3)

### Disclosure of the Invention

### Problems that the Invention is to Solve

In the wave gear device of the background art, however, a stress is concentrated at the diaphragm by the torque transmitted from the internal tooth gear to the external tooth gear. This raises a problem that what can be transmitted is a torque at such a level that the diaphragm is not broken by the stress concentrated at the diaphragm.

The invention has an object to provide a wave gear device capable of transmitting a higher torque than that of the background art.

### Means for Solving the Problem

According to the invention, there is provided a wave gear device comprising: an annular internal tooth gear having internal teeth formed thereon; a flexible external tooth gear including an external tooth portion having external teeth formed to mesh partially with said internal teeth, and arranged on the inner side of said internal tooth gear; and a wave generator arranged on the inner side of said external tooth gear for rotating said external tooth gear while warping the same with respect to said internal tooth gear. The wave gear device has such a constitution that said external tooth gear includes a fixed portion adapted to be fixed on an external member, and a connecting portion for connecting said external tooth portion and said fixed portion, and that said connecting portion is so shaped that the sectional shape cut in a plane extending through the axis of rotation of said external tooth gear is gradually reduced in shape toward the substantial center from the side of said external tooth portion and the side of said fixed portion, and that two confronting outer lines on said sectional shape are substantially arcuate.

By this constitution, in the wave gear device of the invention, the sectional shape, when cut in a plane extending through the axis of rotation of the external tooth gear, of the connecting portion of the external tooth gear is gradually reduced in thickness toward the substantial center from the side of the external tooth portion and the side of the fixed portion. As a result, the concentration of the stress on a portion of the external tooth gear by the torque transmitted from the internal tooth gear to the external tooth gear can be suppressed more than the background art thereby to transmit a higher torque than that of the background art.

According to the wave gear device of the invention, moreover, the wave gear device is so constituted that at least a portion of one of said two outer lines is a first arc, that at least a portion of the other of said two outer lines is a second arc having a radius and a center position different from those of the first arc, and that said first arc and said second arc form the thinnest portion of the substantial center of said sectional shape.
According to the wave gear device of the invention, still moreover, the wave gear device is so constituted that at least a portion of one of said two outer lines is a first arc, that at least a portion of the other of said two outer lines is a second arc having a radius and a center position different from those of the first arc, and that said first arc and said second arc are so formed that a straight line smaller than the radius of said first arc and the radius of said second arm and extending through the center line of said first arc and the center line of said second arc intersects with said first arc and said second arc at the substantial center of said sectional shape of said connecting portion on the side of said external tooth portion and on the side of said fixed portion.

By this constitution, the wave gear device of the invention has the simple shape in the thinnest portion so that the external tooth gear can be easily worked. Advantage of the Invention

The invention can provide a wave gear device capable of transmitting a higher torque than that of the

### background art.

### Brief Description of the Drawings

Fig. 1 is a sectional side elevation of a wave gear device according to a first embodiment of the invention.
Fig. 2 is an enlarged sectional side elevation of a portion of a flex spline shown in Fig. 1.
Fig. 3 is a sectional side elevation of a wave gear device according to a second embodiment of the invention.
Fig. 4 is an enlarged sectional side elevation of a portion of a flex spline shown in Fig. 3.

### Best Mode for Carrying Out the Invention

### Modes of embodiments of the invention

Modes of embodiment of the invention are described in the following with reference to the accompanying drawings.

### (First Embodiment)

At first, the constitution of a wave gear device according to a first embodiment is described.

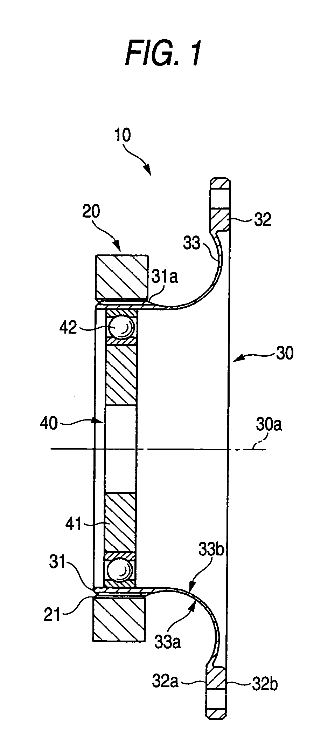

As shown in Fig. 1, a silk hat type wave gear device 10 is provided with: a thick circular spline 20 acting as an annular internal tooth gear having internal teeth 21 formed thereon; a silk hat shaped flex spline 30 as a flexible external tooth gear having an external tooth portion 31 having external teeth 31a formed to mesh partially with the internal teeth 21 and arranged on the inner side of the circular spline 20; and a wave generator 40 arranged on the inner side of the flex spline 30 and acting as a wave generator for rotating the flex spline 30 with respect to the circular spline 20 while warping the flex spline 30.

The flex spline 30 includes a boss portion 32 as a fixed portion to be fixed on the not-shown external member, and a connecting portion 33 for connecting the external tooth portion 31 and the boss portion 32.

On the other hand, the wave generator 40 includes an elliptical cam 41 and a thin bearing 42 fitted on the outer circumference of the cam 41.

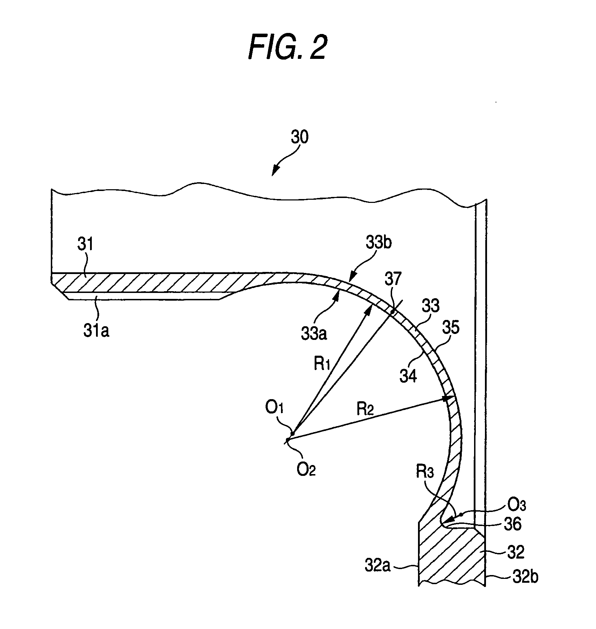

The connecting portion 33 of the flex spline 30 is so shaped that the sectional shape cut in a plane extending through the axis of rotation 30a (as referred to Fig. 1) of the flex spline 30 is gradually reduced in thickness from the side of the external tooth portion 31 and the boss portion 32 toward the substantial center, as shown in Fig. 2. Moreover, the connecting portion 33 is bulged to the side of a face 32b opposed to the external tooth portion 31 of the boss portion 32 with respect to a face 32a on the side of two confronting external tooth portion 31 on the sectional shape cut on a plane extending through the axis of rotation 30a.

Here, an outer line 33a is formed of an arc 34 as a first arc leading to the external tooth portion 31 and the boss portion 32 and having a radius R1 and a center position O1. On the other hand, an outer line 33b is formed of both an arc 35 as a second arc leading to the external tooth portion 31 and having a radius R2 and a center portion 02, and an arc 36 leading to the arc 35 and the boss portion 32 and having a radius R3 and a center position 03. Here, the arc 34 and the arc 35 form the substantially central thinnest portion 37 having the least thickness of the sectional shape of the connecting portion 33, as cut in the plane extending through the axis of rotation 30a. Specifically, the points, at which the straight lines extending through the center position O1 of the first arc and the center position 02 of the second arc intersect with the first and second arcs, are individually located at the center of the connecting portion 33. Moreover, the radius R1 is smaller than the radius R2, and the distance from the thinnest portion 37 to the center position is shorter than the distance from the thinnest portion 37 to the center position 02.

Next, the actions of the silk hat type wave gear device 10 are described.

In the silk hat type wave gear device 10, for example, when the rotary motion is inputted from the input shaft of an industrial robot to the cam 41 of the wave generator 40 while the circular spline 20, the boss portion 32 of the flex spline 30 and the cam 41 of the wave generator 40 being fixed to the casing, the output shaft and the input shaft of the industrial robot, respectively, the rotary motion inputted to the cam 41 of the wave generator 40 is internally reduced in speed, and is outputted from the boss portion 32 of the flex spline 30 to the output shaft.

In the silk hat type wave gear device 10, when the rotary motion inputted to the cam 41 of the wave generator 40 is internally reduced in speed and outputted from the boss portion 32 of the flex spline 30, the torque is transmitted from the circular spline 20 to the flex spline 30. The sectional shape, when cut in a plane extending through the axis of rotation 30a of the flex spline 30, of the connecting portion 33 of the flex spline 30 is gradually reduced in thickness toward the substantial center from the side of the external tooth portion 31 and the side of the boss portion 32. As a result, the concentration of the stress on a portion of the flex spline 30 by the torque transmitted from the circular spline 20 to the flex spline 30 can be suppressed more than the background art.

As described hereinbefore, the silk hat type wave gear device 10 can suppress such a concentration of stress more than the background art as might otherwise be caused at a portion of the flex spline 30 by the torque transmitted from the circular spline 20 to the flex spline 30. Therefore, even the size and weight equivalent to those of the background art can transmit a higher torque than that of the background art, and the magnitude of the transmittable torque equivalent to that of the background art can reduce the size and weight more than the background art.

In the silk hat type wave gear device 10, moreover, the thinnest portion 37 is formed to have a simple shape of the arc 34 and the arc 35 so that the working of the flex spline 30 can be facilitated. Here, the thinnest portion 37 may have a more complicated shape.

In the silk hat type wave gear device 10, the outer line 33a is a complete arc, but at least one of the outer line 33a and the outer line 33b may not be a complete arc, if the outer lines 33a and 33b are substantially arcuate individually as a whole. If the silk hat type wave gear device 10 has substantially arcuate outer lines 33a and 33b, for example, the outer lines 33a and 33b may have straight portions at least in those portions.

### (Second Embodiment)

At first, the constitution of a wave gear device according to a second embodiment is described.

Of the constitutions of the wave gear device according to this embodiment, a constitution like that of the silk hat type wave gear device 10 (as referred to Fig. 1) according to the first embodiment is omitted on its detailed description by designating it with reference numerals similar to those of the constitution of the silk hat type wave gear device 10.

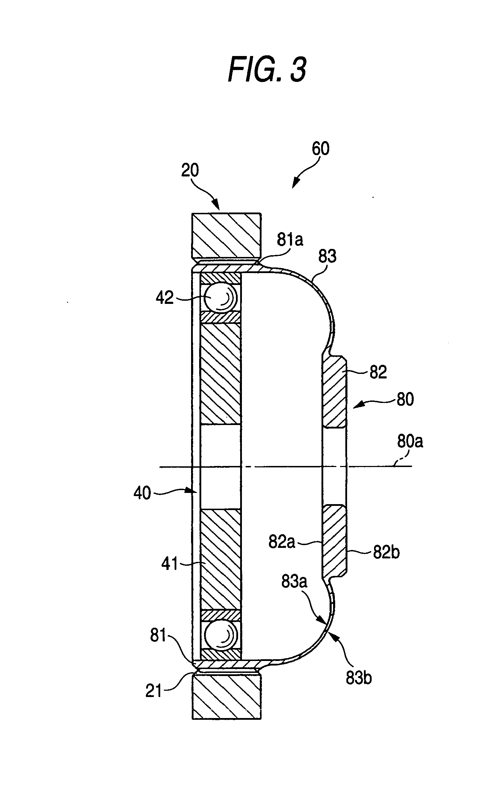

As shown in Fig. 3, a cup type wave gear device 60 as the wave gear device according to this embodiment is similar to such a constitution that the silk hat type wave gear device 10 is provided with, in place of the flex spline 30 (as referred to Fig. 1), a thin cup-shaped flex spline 80 including an external tooth portion 81 having an external teeth 81a meshing partially with the internal teeth 21 and acting as a flexible external tooth gear arranged on the inner side of the circular spline 20.

The flex spline 80 includes a boss portion 82 as a fixed portion to be fixed on the not-shown external member, and a connecting portion 83 for connecting the external tooth portion 81 and the boss portion 82.

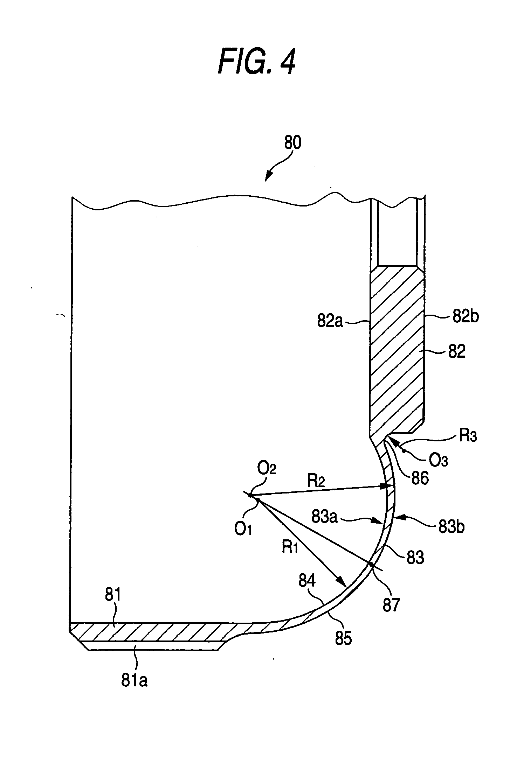

The connecting portion 83 of the flex spline 80 is so shaped that the sectional shape cut in a plane extending through the axis of rotation 80a (as referred to Fig. 3) of the flex spline 80 is gradually reduced in thickness from the side of the external tooth portion 81 and the boss portion 82 toward the substantial center, as shown in Fig. 4. In the connecting portion 83, moreover, two confronting outer lines 83a and 83b in a sectional shape cut in a plane extending through the axis of rotation 80a are substantially arcuate. Moreover, a portion of the connecting portion 83 is partially bulged to the side of a face 82b opposed to the external tooth portion 81 of the boss portion 82 with respect to a face 82a on the side of the external tooth portion 81 of the boss portion 82.

Here, the outer line 83a is formed of an arc 84 as a first arc leading to the external tooth portion 81 and the boss portion 82 and having a radius R1 and a center position O1. On the other hand, the outer line 83b is formed of both an arc 85 as a second arc leading to the external tooth portion 81 and having a radius R2 and a center portion O2, and an arc 86 leading to the arc 85 and the boss portion 82 and having a radius R3 and a center position 03. Here, the arc 84 and the arc 85 form the substantially central thinnest portion 87 having the least thickness of the sectional shape of the connecting portion 83, as cut in the plane extending through the axis of rotation 80a. Specifically, the points, at which the straight lines extending through the center position O1 of the first arc and the center position 02 of the second arc intersect with the first and second arcs, are individually located at the center of the connecting portion 83. Moreover, the radius R1 is smaller than the radius R2, and the distance from the thinnest portion 87 to the center position is shorter than the distance from the thinnest portion 87 to the center position 02.

Next, the actions of the cup type wave gear device 60 are described.

In the cup type wave gear device 60, for example, when the rotary motion is inputted from the input shaft of an industrial robot to the cam 41 of the wave generator 40 while the circular spline 20, the boss portion 82 of the flex spline 80 and the cam 41 of the wave generator 40 being fixed to the casing, the output shaft and the input shaft of the industrial robot, respectively, the rotary motion inputted to the cam 41 of the wave generator 40 is internally reduced in speed, and is outputted from the boss portion 82 of the flex spline 80 to the output shaft.

In the cup type wave gear device 60, when the rotary motion inputted to the cam 41 of the wave generator 40 is internally reduced in speed and outputted from the boss portion 82 of the flex spline 80, the torque is transmitted from the circular spline 20 to the flex spline 80. The sectional shape, when cut in a plane extending through the axis of rotation 80a of the flex spline 80, of the connecting portion 83 of the flex spline 80 is gradually reduced in thickness toward the substantial center from the side of the external tooth portion 81 and the side of the boss portion 82. As a result, the concentration of the stress on a portion of the flex spline 80 by the torque transmitted from the circular spline 20 to the flex spline 80 can be suppressed more than the background art.

As described hereinbefore, the cup type wave gear device 60 can suppress such a concentration of stress more than the background art as might otherwise be caused at a portion of the flex spline 80 by the torque transmitted from the circular spline 20 to the flex spline 80. Therefore, even the size and weight equivalent to those of the background art can transmit a higher torque than that of the background art, and the magnitude of the transmittable torque equivalent to that of the background art can reduce the size and weight more than the background art.

In the cup type wave gear device 60, moreover, the thinnest portion 87 is formed to have a simple shape of the arc 84 and the arc 85 so that the working of the flex spline 80 can be facilitated. Here, the thinnest portion 87 may have a more complicated shape.

In the cup type wave gear device 60, the outer line 83a is a complete arc, but at least one of the outer line 83a and the outer line 83b may not be a complete arc, if the outer lines 83a and 83b are substantially arcuate individually as a whole. If the cup type wave gear device 60 has substantially arcuate outer lines 83a and 83b, for example, the outer lines 83a and 83b may have straight portions at least in those portions.

### Industrial Applicability

As has been described hereinbefore, the wave gear device according to the invention has an effect to transmit a higher torque than that of the background art, and is useful as a wave gear device to be used in the fields of industrial robots, semiconductors, medical devices and aerospaces.

## Claims

1. A wave gear device comprising: an annular internal tooth gear having internal teeth formed thereon; a flexible external tooth gear including an external tooth portion having external teeth formed to mesh partially with said internal teeth, and arranged on the inner side of said internal tooth gear; and a wave generator arranged on the inner side of said external tooth gear for rotating said external tooth gear while warping the same with respect to said internal tooth gear, **characterized:**
**in that** said external tooth gear includes a fixed portion adapted to be fixed on an external member, and a connecting portion for connecting said external tooth portion and said fixed portion; and
**in that** said connecting portion is so shaped that the sectional shape cut in a plane extending through the axis of rotation of said external tooth gear is gradually reduced in shape toward the substantial center from the side of said external tooth portion and the side of said fixed portion, and that two confronting outer lines on said sectional shape are substantially arcuate.

2. A wave gear device as set forth in claim 1,
**characterized:**
**in that** at least a portion of one of said two outer lines is a first arc;
**in that** at least a portion of the other of said two outer lines is a second arc having a radius and a center position different from those of the first arc; and
**in that** said first arc and said second arc form the thinnest portion of the substantial center of said sectional shape.

3. A wave gear device as set forth in claim 1,
**characterized:**
**in that** at least a portion of one of said two outer lines is a first arc;
**in that** at least a portion of the other of said two outer lines is a second arc having a radius and a center position different from those of the first arc; and
**in that** said first arc and said second arc are so formed that a straight line smaller than the radius of said first arc and the radius of said second arm and extending through the center line of said first arc and the center line of said second arc intersects with said first arc and said second arc at the substantial center of said sectional shape of said connecting portion on the side of said external tooth portion and on the side of said fixed portion.
